**Europäisches Patentamt**

**European Patent Office**

**Office européen des brevets**

(19)

(11) Veröffentlichungsnummer: **0 028 806**
**B1**

# (12) EUROPÄISCHE PATENTSCHRIFT

(45) Veröffentlichungstag der Patentschrift:
06.07.83

(21) Anmeldenummer: 80106818.0

(22) Anmeldetag: 05.11.80

(51) Int. Cl.³: **B 29 B 5/06, H 01 F 41/12,**
**G 01 F 13/00**

(54) **Vielfachgiesskopf.**

(30) Priorität: 09.11.79 DE 2945403

(43) Veröffentlichungstag der Anmeldung:
20.05.81 Patentblatt 81/20

(45) Bekanntmachung des Hinweises auf die Patenterteilung:
06.07.83 Patentblatt 83/27

(84) Benannte Vertragsstaaten:
CH FR GB IT LI SE

(56) Entgegenhaltungen:
DD-A-39 265
DE-A-2 028 058
DE-A-2 324 621
DE-A-2 360 299
DE-C-905 065
DE-U-7 032 190

(73) Patentinhaber: **SIEMENS AKTIENGESELLSCHAFT,**
**Berlin und München Wittelsbacherplatz 2,**
**D-8000 München 2 (DE)**

(72) Erfinder: **Heinzl, Alfred, Ing.grad., Geigenberger**
**Strasse 29, D-8000 München 71 (DE)**
Erfinder: **Stadler, Heinz, Mettnauer Strasse 19,**
**D-8000 München 60 (DE)**

Vielfachgießkopf

Die Erfindung bezieht sich auf einen Vielfachgießkopf, bestehend aus einem Gehäuse mit einem Vorratsraum für Vergußmasse und einer Eingangsöffnung für Druckluft sowie mit mehreren Ausgußdüsen, denen jeweils ein individuell steuerbares Ventil zugeordnet ist.

Derartige Gießköpfe werden beispielsweise zum Vergießen von elektrischen Bauelementen mit Gießharz verwendet. Mehrfachgießköpfe mit einer Mehrzahl von Austrittsdüsen dienen dazu, im Fertigungsablauf mehrere Bauelemente gleichzeitig zu vergießen. Dies ist im allgemeinen unproblematisch, wenn die benötigte Menge an Vergußmasse für alle zu vergießenden Teile gleich ist. Dies ist jedoch nicht immer der Fall. Beispielsweise haben Relaiswicklungen auch bei gleicher Windungszahl jeweils ein sehr unterschiedliches Volumen, so daß beim Vergießen eines Relais bzw. einer Relaisspule in einer Kappe unterschiedliche Mengen an Vergußmasse eingefüllt werden müssen. Diesem Umstand konnte man beispielsweise dadurch Rechnung tragen, daß man entweder jedes Bauelement einzeln vergossen hat oder daß man bei Mehrfach-Gießeinrichtungen in jedes Bauelement zunächst eine gleiche Grundmenge an Vergußmittel eingefüllt und danach individuell von Hand das Restvolumen nachgefüllt hat. Eine rationelle Organisation des Vergießvorganges war dadurch jedoch nicht möglich.

Aus der Druckschrift DE-U-7 032 190 war aber auch bereits eine Dosiereinrichtung für Gießharz bekannt, die einem Vielfachgießkopf der eingangs genannten Art entspricht. Bei dieser Dosiereinrichtung wird das flüssige Harz aus einem Druckkessel über elastische Schläuche den Wicklungen zugeführt. Die Dosierung geschieht dabei mittels zeitgesteuerter Magnetventile, welche die Schläuche öffnen und schließen. Damit ist es also bereits möglich, über jeden Schlauch mit nachfolgender Ausgußdüse eine individuell dosierte Menge an Vergußmasse abzugeben. Allerdings können Probleme bei dieser bekannten Dosiereinrichtung dann auftreten, wenn ein schnell aushärtendes Harz verwendet wird oder wenn dieses Harz mit Füllstoffen versetzt ist, welche sich leicht im Gießkopf bzw. Druckkessel verstopfen können. Insbesondere in den dort verwendeten elastischen Schläuchen besteht also die Gefahr, daß Gießharz in unerwünschter Weise aushärtet und dann nur schwer wieder zu entfernen ist.

Aufgabe der Erfindung ist es, einen Vielfachgießkopf zu schaffen, welcher leicht zu handhaben und leicht zu reinigen ist und dadurch insbesondere auch zum problemlosen Vergießen schnell aushärtender Vergußmassen geeignet ist.

Erfindungsgemäß wird diese Aufgabe bei einem Vielfachgießkopf der eingangs genannten Art dadurch gelöst, daß die Ventile jeweils einen im Gehäuse geführten, mit seiner Spitze in die zugehörige Ausgußdüse einsteckbaren Ventilstößel besitzen und daß das Gehäuse aus zwei Teilen besteht, wobei die Trennebene der beiden Teile durch die Achsen der Ventilführungen verläuft.

Der Vielfachgießkopf enthält damit lediglich wenige und einfach zu reinigende Teile. Die Zerlegbarkeit des Vielfachgießkopfes in zwei Teile entlang einer durch die Ventilachsen verlaufenden Trennebene ermöglicht eine gute Handhabung und eine leichte Reinigungsmöglichkeit des Vielfachgießkopfes und der Ventile.

In einer zweckmäßigen Ausführungsform sind die einzelnen Ventilstößel jeweils über eine Hebeleinrichtung betätigbar. Um eine gute Verteilung der Vergußmasse innerhalb des Vielfachgießkopfes zu erreichen, ist in einer zweckmäßigen Ausgestaltung vorgesehen, daß die Einfüllöffnung auf einen entlang der Reihe der Ausgußdüsen verlaufenden Verteilerdamm mündet. Dieser Verteilerdamm kann einen hochgewölbten Rand aufweisen, so daß die Vergußmasse sich erst über die gesamte Länge verteilt und dann gleichmäßig über den Rand zu allen Ausgußdüsen fließt. Dabei ist es weiterhin zweckmäßig, daß die Einfüllöffnung an einem Gießrohr vorgesehen ist, daß etwa in der Mitte der in einer Reihe angeordneten Ausgußdüsen auf dem Verteilerdamm mündet. Zur besseren Verteilung der Vergußmasse kann außerdem der Verteilerdamm von der Einfüllöffnung ausgehend zu den entfernteren Ausgußdüsen ein Gefälle aufweisen.

Die beiden Formteile des Gießkopfgehäuses können mittels Spannbacken zusammengehalten werden, wobei zweckmäßigerweise mindestens einer der Spannbacken beheizbar sein kann.

Die Erfindung wird nachfolgend an einem Ausführungsbeispiel anhand der Zeichnung näher erläutert. Es zeigt

Fig. 1 einen Schnitt durch einen erfindungsgemäßen Vielfachgießkopf,

Fig. 2 eine Seitenansicht einer offenen Gießkopfhälfte.

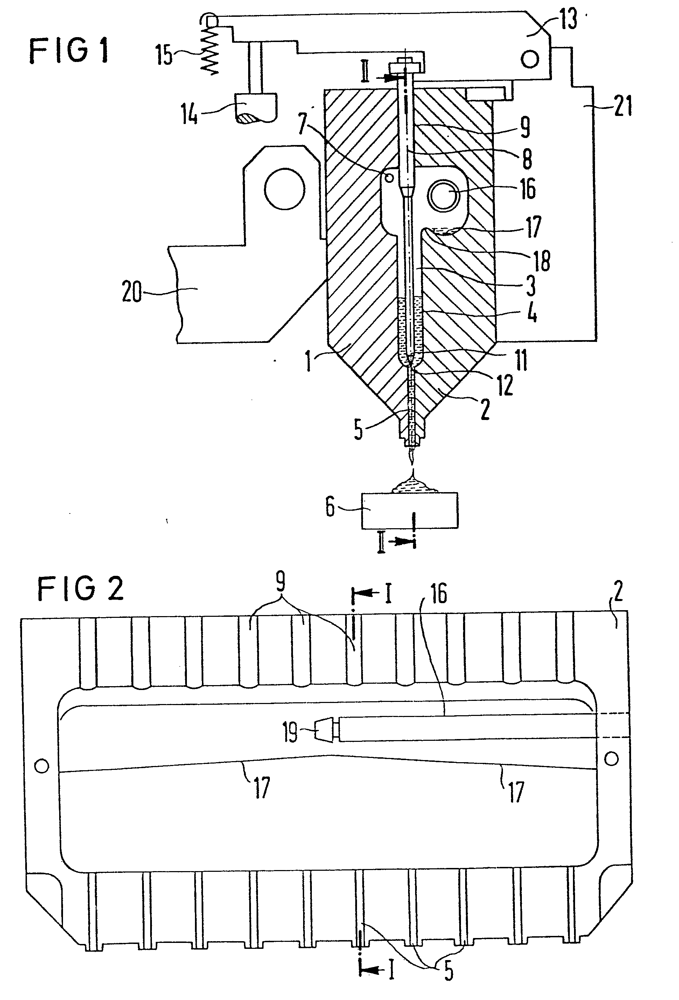

Die Fig. 1 zeigt einen Gießkopf im Schnitt. Das Gehäuse besteht dabei aus zwei Hälften 1 und 2, die im Innern einen Vorratsraum 3 einschließen. In diesem Vorratsraum 3 befindet sich die Vergußmasse 4, welche über die Ausgußdüsen 5 zum Vergießen von Bauteilen 6 ausgepreßt wird. Das Auspressen erfolgt mittels Druckluft, welche über eine Bohrung 7 einströmt.

Jeder Ausgußdüse 5 ist ein Ventilstößel 8 zugeordnet, der in einer Führung 9 zwischen den beiden Gehäusehälften geführt ist und bei einer senkrechten Bewegung nach unten mit seiner Spitze 11 in den Ventilsitz 12 eingesteckt wird und damit die zugehörige Ausgußdüse 5 verschließt. Die einzelnen Ventilstößel werden über jeweils einen zugehörigen Kipphebel 13 individuell betätigt. Zu diesem Zweck ist jeweils ein Hubzylinder 14 vorgesehen, der gegen eine Vorspannfeder 15 wirkt.

Ist ein Bauteil 6 mit Vergußmasse bis zu einem vorgegebenen Niveau gefüllt, so kann über eine nicht dargestellte Abtasteinrichtung ein Signal erzeugt werden, welches den Hubzylinder 14 antreibt, so daß er den Kipphebel 13 und damit den zugehörigen Ventilstößel 8 senkt. Der Vergießvorgang wird damit für das betreffende Bauteil beendet, während durch die übrigen Ausgußdüsen weiterhin Vergußmasse ausströmt.

Der Vorrat an Vergußmasse im Vorratsraum 4 wird über ein Gießrohr 16 jeweils nachgefüllt. Dieses Gießrohr 16 mündet auf einen Verteilerdamm 17, wo sie sich längs der Ausgußdüsen verteilt und dann über den hochgezogenen Rand 18 nach unten fließt. Wie in Fig. 2 zu sehen ist, erstreckt sich das Gießrohr 16 bis etwa in die Mitte des Gießkopfes, so daß sich von der Einfüllöffnung 19 aus die Vergußmasse etwa gleichmäßig über den Verteilerdamm zu allen Ausgußdüsen hin verteilen kann. Der Verteilerdamm 17 weist außerdem, ausgehend von der Einfüllöffnung 19, zu den Enden des Gießkopfes hin jeweils ein Gefälle auf, so daß auch zähflüssige Gießmassen gleichmäßig bis zu den äußersten Ausgußdüsen hin fließen.

Die beiden Hälften 1 und 2 des Gießkopfgehäuses werden mit einem Spannbacken 20 und einem Anlagebacken 21 zusammengehalten, so daß eine Dichtung zwischen den beiden Teilen nicht erforderlich ist. Der Anlagebacken 21 ist zweckmäßigerweise beheizbar, so daß die Vergußmasse stets auf einer vorgegebenen Temperatur gehalten werden kann; damit wird gewährleistet, daß die Vergußmasse mit gleichbleibender Viskosität verarbeitet werden kann.

Die Fig. 2 zeigt in einer Seitenansicht die offene Gießkopfhälfte 2. Daraus sind die zehn Ausgußdüsen 5 zu erkennen. Über jeder Ausgußdüse 5 ist eine Ventilführung 9 angeordnet. Die Ventilstößel selbst sind nicht dargestellt. Im übrigen zeigt die Fig. 2, wie bereits erwähnt, das Gießrohr 16 und den nach zwei Seiten abfallenden Verteilerdamm 17.

**Patentansprüche**

1. Vielfachgießkopf, bestehend aus einem Gejäuse (1, 2) mit einer Einfüllöffnung (19) und einem Vorratsraum (3) für Vergußmasse (4) und einer Eingangsöffnung für Druckluft, sowie mit mehreren Ausgußdüsen (5), denen jeweils ein individuell steuerbares Ventil zugeordnet ist, dadurch gekennzeichnet, daß die Ventile jeweils einen im Gehäuse geführten, mit seiner Spitze (11) in die zugehörige Ausgußdüse (5) einsteckbaren Ventilstößel (8) besitzen und daß das Gehäuse aus zwei Teilen (1, 2) besteht, wobei die Trennebene der beiden Teile durch die Achsen der Ventilführungen (9, 12) verläuft.

2. Vielfachgießkopf nach Anspruch 1, dadurch gekennzeichnet, daß die einzelnen Ventilstößel (8) jeweils über eine Hebeleinrichtung (13) betätigbar sind.

3. Vielfachgießkopf nach Anspruch 1 oder 2, dadurch gekennzeichnet, daß die Einfüllöffnung (19) auf einen entlang der Ausgußdüsen (5) verlaufenden Verteilerdamm (17) mündet.

4. Vielfachgießkopf nach einem der Ansprüche 1 bis 3, dadurch gekennzeichnet, daß die Einfüllöffnung (19) an einem Gießrohr (16) vorgesehen ist, das etwa in der Mitte der Reihe von Ausgußdüsen (5) mündet.

5. Vielfachgießkopf nach Anspruch 3 oder 4, dadurch gekennzeichnet, daß der Verteilerdamm (17) ausgehend von der Einfüllöffnung (19) zu den entfernten Ausgußdüsen (5) hin ein Gefälle aufweist.

6. Vielfachgießkopf nach einem der Ansprüche 3 bis 5, dadurch gekennzeichnet, daß der Verteilerdamm (17) zu den Ausgußdüsen (5) hin einen aufgewölbten Rand (18) besitzt.

7. Vielfachgießkopf nach einem der Ansprüche 1 bis 6, dadurch gekennzeichnet, daß die beiden Gehäuseteile (1, 2) mittels Spannbacken (20, 21) zusammengehalten sind.

8. Vielfachgießkopf nach Anspruch 7, dadurch gekennzeichnet, daß zumindest einer der Spannbacken (21) beheizbar ist.

**Claims**

1. A multiple casting head consisting of a housing (1, 2) which has a filling opening (19) and a reservoir (3) for casting material (4), and an input opening for compressed air, and which has a plurality of discharge nozzles (5) to each of which is assigned a respective individually-controllable valve, characterised in that each of the valves has a respective valve tappet (8) which is guided in the housing and the tip (11) of which can be inserted into the discharge nozzle (5) associated therewith; and that the housing consists of two parts (1, 2), the plane of separation of the two parts passing through the axes of the valve guides (9, 12).

2. A multiple casting head as claimed in claim 1, characterised in that the individual valve tappets (8) are respectively operable by means of a lever arrangement (13).

3. A multiple casting head as claimed in Claim 1 or Claim 2, characterised in that the filling opening (19) opens onto a distributor dam (17) which runs along the discharge nozzles (5).

4. A multiple casting head as claimed in one of Claims 1 to 3, characterised in that the filling opening (19) is arranged on a pouring pipe (16) which leads to approximately the centre of the row of discharge nozzles (5).

5. A multiple casting head as claimed in Claim 3 or Claim 4, characterised in that starting from the filling opening (19), the distibutor dam (17) slopes downwardly towards the far discharge nozzles (5).

6. A multiple casting head as claimed in one of Claims 3 to 5, characterised in that the distributor dam (17) has an upwardly curved edge (18) towards the discharge nozzles (5).

7. A multiple casting head as claimed in one of Claims 1 to 6, characterised in that the two parts of the housing (1, 2) are held together by means of clamping jaws (20, 21).

8. A multiple casting head as claimed in Claim 7, characterised in that at least one of the clamping jaws (21) can be heated.

## Revendications

1. Tête à mouler multiple constituée d'un boîtier (1, 2) ayant une ouverture de remplissage (19) et une chambre formant réservoir (3) pour de la masse à sceller (4) et une ouverture d'entrée pour de l'air comprimé, ainsi que plusieurs buses de sortie (5) à chacune desquelles est associée une soupape pouvant être commandée individuellement, caractérisée en ce que les soupapes ont chacune un poussoir de soupape (8), qui est guidé dans le boîtier et qui peut pénétrer par son pointeau (11) dans la buse de sortie (5) qui lui est associée et en ce que le boîtier est en deux parties, le plan de séparation des deux parties passant par les axes des pièces de guidage (9, 12) des soupapes.

2. Tête à mouler multiple suivant la revendication 1, caractérisée en ce que les poussoirs de soupape (8) peuvent être manoeuvrés respectivement par un dispositif à levier (13).

3. Tête à mouler multiple suivant la revendication 1 ou 2, caractérisée en ce que l'ouverture de remplissage (19) débouche sur un barrage formant répartiteur (17) s'étendant le long des buses de sortie (5).

4. Tête à mouler multiple suivant l'une des revendications 1 à 3, caractérisée en ce que l'ouverture de remplissage (19) est prévue sur un tube de coulée (16) qui débouche à peu près au milieu de la rangée de buses de sortie (5).

5. Tête à mouler multiple suivant la revendication 3 ou 4, caractérisée en ce que le barrage formant répartiteur (17) présente une pente allant de l'ouverture de remplissage (19) vers les buses de sortie (5) les plus éloignées.

6. Tête à mouler multiple suivant l'une des revendications 3 à 5, caractérisée en ce que le barage formant répartiteur (17 possède, en direction des buses de sortie (5), un bord arrondi relevé (18).

7. Tête à mouler multiple suivant l'une des revendications 1 à 6, caractérisée en ce que les deux parties du boîtier (1, 2) sont maintenues ensemble au moyen de mâchoires de serrage (20, 21).

8. Tête à mouler multiple suivant la revendication 7, caractérisée en ce qu'au moins l'une des mâchoires de serrage (21) peut être chauffée.

FIG 1

FIG 2